# EUROPÄISCHE PATENTSCHRIFT

(11) **EP 2 710 535 B1**
(45) Veröffentlichungstag und Bekanntmachung des Hinweises auf die Patenterteilung: **13.03.2019**
(21) Anmeldenummer: 12719724.2
(22) Anmeldetag: 09.05.2012
(51) Int. Cl.: G06Q 30/00, G06F 17/30

(54) **SYSTEM FÜR DIE ERWEITERTE INFORMATIONSBEREITSTELLUNG ZU EINEM HAUSGERÄT SOWIE ZUGEHÖRIGES VERFAHREN UND COMPUTERPROGRAMMPRODUKT**
SYSTEM FOR PROVIDING INFORMATION ON A DOMESTIC APPLIANCE IN AN ENHANCED MANNER, CORRESPONDING METHOD, AND COMPUTER PROGRAM PRODUCT
SYSTÈME DESTINÉ À LA MISE À DISPOSITION DE PLUS AMPLES INFORMATIONS SUR UN APPAREIL MÉNAGER AINSI QUE PROCÉDÉ Y ÉTANT ASSOCIÉ ET PRODUIT LOGICIEL

(30) Priorität: 18.05.2011 DE 102011076074
(43) Veröffentlichungstag der Anmeldung: 26.03.2014
(73) Patentinhaber: BSH Hausgeräte GmbH, 81739 München (DE)
(72) Erfinder: CLEMENS, Kay-Uwe, 83527 Haag in Oberbayern (DE); SCHÜSSLER, Andreas, 81541 München (DE)
(86) Internationale Anmeldenummer: PCT/EP2012/058534
(87) Internationale Veröffentlichungsnummer: WO 2012/156245

(56) Entgegenhaltungen:
- WO-A1-2008/134901
- DE-A1-102008 007 646

## Beschreibung

Die Erfindung bezieht sich auf ein System für eine erweiterte Informationsbereitstellung zu einem Hausgerät. Ferner betrifft die Erfindung ein zugehöriges Verfahren und ein Computerprogrammprodukt.

Durch Vorschriften betreffend des Verbraucherschutzes ist es zwar heute möglich, dass ein Verbraucher, der ein für seinen privaten Bereich vorgesehenes Produkt, wie ein Hausgerät erwerben möchte, bereits im Auftritt von Vertriebsfirmen in deren Internetseiten eigentlich genügend Informationen erhalten kann, um sich für einen Kauf eines bestimmten Hausgerätes, entscheiden zu können.

Es hat sich jedoch gezeigt, dass es trotzdem viele potentielle Interessenten betreffend Hausgeräten gibt, die doch gerne ein solches Hausgerät in einen lokalisierbarem Bereich, wie einem Ausstellungs- bzw. Verkaufsraum sehen möchten, um sich einen Eindruck über zur Wahl stehende Hausgeräte verschiedener Ausführungsformen und Fabrikate machen zu können. Dabei sollte dem Bedürfnis eines Interessenten Rechnung getragen werden, nicht nur über das Befragen einer Person, wie eines Beraters oder Verkäufers, zu zusätzlichen Informationen zu gelangen.

Es wird zunächst noch angegeben, dass es bereits bekannt ist, für den Bereich von Montage, Service und Wartung auf die sogenannte Erweiterte Realität, zurückzugreifen, um zusätzliche Informationen verfügbar haben zu können, die sonst in sehr umständlicher Weise aus Datenbüchern, Serviceanweisungen und dgl. ausgelesen werden müssten. Nach der Patentschrift DE 100 41 104 C1 ist zum Beispiel ein mobiles Endgerät mit einem Headset bzw. einer Datenbrille verbunden. Eine solche Gerätetechnik wäre für Kunden in einem Ausstellungs- bzw. Verkaufsraum von Produkten, wie Hausgeräten, jedoch wenig ansprechend und würde nicht akzeptiert werden.

Ferner wird noch angegeben, dass es aus der DE 102 45 900 A1 bekannt ist, für Produkte wie Autos, Bücher oder Spielzeuge, die einen Nutzer interessieren, weitere Produktinformationen zu erlangen, indem der Nutzer bzw. der potentielle Interessent einfach ein Bild von diesem Produkt erzeugt. Danach wird er auf eine Webseite mit weiteren Informationen zu diesem Produkt geleitet. Voraussetzung dafür ist jedoch, dass der Anbieter der Produktinformationen zugehörig zu seiner Webseite eine bildbasierte Suchfunktion anbietet. Für den Nutzer genügt es dann, über ein nicht in besonderem Maße ausgerüstetes Endgerät zu verfügen, das im Wesentlichen eine Kamera und selbstredend über ein Display verfügt und an ein Datenfernübertragungsnetz angeschlossen ist.

In WO2008/134901A1 wird ein System beschrieben, welches es erlaubt, ein erfasstes Bild mit weiteren Informationen anzureichern.

Der Anmelderin liegt bereits ein System für die erweiterte Informationsbereitstellung vor, bei dem ein Kunde über ein mobiles Endgerät von mehreren zu einem System gehörenden Endgeräten verfügt, das eine Kamera aufweist, wobei die Kamera geeignet ist, ein analysierbares Bild eines Energielabels und ein analysierbares Bild von Begrenzungsgeometriedaten eines zur Auswahl anstehenden Hausgerätes zu erzeugen. Dieses System hat sich bewährt, jedoch kann nicht bei jedem Produkt, insbesondere Hausgerät, das für einen Verbraucher im Sinne des Bürgerlichen Gesetzbuches bestimmt ist, von dem Vorhandensein eines Energielabels ausgegangen werden.

Demnach ist es vordringlich, über eine systembezogene Gerätetechnik verfügen zu können, die so ausgerichtet ist, um ein Hausgerät erkennen zu können und dabei weitere Informationen über das im Interesse liegende Hausgerät, gerichtet an eine Person, wie einen potentiellen Kunden bzw. an einen Verbraucher, zur Verfügung zu stellen.

Die Aufgabe der Erfindung besteht daher darin, ein technisches System für eine erweiterte Informationsbereitstellung für Hausgeräte bereitzustellen, wobei auch der technische Aufbau samt zugehöriger Funktion eines einzelnen Gerätes, das von einer die Information erhaltenden Person, wie für einen Verbraucher, benutzt wird, in Bezug auf das System anzugeben ist.

Die Erfindung bzw. die Aufgabenlösung besteht nun darin, dass ein System für die erweiterte Informationsbereitstellung, eines betrachtbaren, realen Hausgerätes, vorgesehen ist, wobei eine Person, an die sich die Informationsbereitstellung richtet, über ein mobiles Endgerät von mindestens einem zum System gehörenden Endgerät verfügt, das eine Kamera aufweist, wobei die Kamera geeignet ist, ein analysierbares Bild einer Gesamtansicht eines Hausgerätes zu erzeugen, wobei das jeweilig analysierbare Bild auch auf einem Display des mobilen Endgerätes darstellbar ist, sowie dass für erhaltene analysierbare Bilder, ein Analysierer bzw. Dekodierer vorgesehen ist, der analysierte Daten ausgibt, wobei eine drahtlose Übertragung an einen, insbesondere externen, Rechner vorgesehen ist, dessen Datenbank zu den übertragenen Daten weitere aus der Datenbank auslesbare Daten ausgibt, die drahtlos an das mindestens eine mobile Endgerät übertragbar sind, und eine Empfangs- und Verarbeitungseinheit für das mobile Endgerät vorgesehen ist, die die ausgelesenen Daten derart aufbereitet, dass eine Darstellung auf dem Display des mobiles Endgerätes, hinzukommend zu dem Bild über die Gesamtansicht des realen Hausgerätes ermöglicht wird, wobei ein Bild des Hausgerätes, das aus der Datenbank abrufbar ist, auf dem Display des mobilen Endgerätes für eine Deckungsgleichheit mit dem Bild des realen Hausgerätes und dessen Ergänzung durch Darstellungen, hergeleitet aus Daten der Datenbank, vorsehbar ist. Unter Bild des Hausgerätes kann auch ein Bild verstanden werden, das nur charakteristische Einzelheiten, die z. B. Marken- typisch sind oder nur den Umriss des Hausgerätes betreffen, verstanden werden.

In Abkehr der seither für Monteure zur Verfügung gestellten Datenbrille erhält der potentielle Verbraucher für den Bereich, innerhalb dessen die realen Hausgeräte sich befinden, alle ergänzenden Informationen betreffend das ihn interessierende Hausgerät auf dem Display eines mobilen Endgerätes bereitgestellt bzw. dargestellt. Voraussetzung dafür ist, was nochmals zur Klarstellung angegeben werden soll, dass das Bild des realen Hausgerätes und das Bild aus der Datenbank deckungsgleich zu bringen sind, wobei die Bezeichnung Bild, auch ein Bild mit einer reduzierten Anzahl von Einzelheiten sein kann und gegebenenfalls auch nur den Umriss des Hausgerätes betreffen kann.

Das bei der Erfindung zur Anwendung gelangende mobile Telefon mit Kamera kann vom äußeren Erscheinungsbild her Übereinstimmung mit handelsüblichen Geräten zeigen, jedoch müssen Vorkehrungen getroffen werden, dass der durch die Erfindung bestimmte Aufbau und/ oder die durch die Erfindung bestimmte Funktionsweise, insbesondere in Bezug auf die elektronischen Schaltkreise, vorliegt.

Bei dem gerätetechnischen Aufbau des mindestens einen zum System gehörenden mobilen Endgerätes ist erfindungsgemäß darauf geachtet worden, dass sowohl die Erkennung des infrage kommenden realen Hausgerätes beherrscht wird als auch dass ergänzende Darstellungen über das als richtig erkannte Hausgerät auf dem Display möglich sind.

Bei der Erkennung des realen Hausgerätes spielen gestaltungstypische und unterscheidungskräftige Merkmale des Hausgerätes eine große Rolle. Indem die Deckungsgleichheit des Bildes realen Hausgerätes und des Bildes des Hausgerätes, das aus den Daten der Datenbank abrufbar ist, hergestellt wird, ist das reale Hausgerät gegebenenfalls auch identifiziert, mindestens jedoch bezüglich seiner Ausrichtung im Raum spezifiziert. Um jedoch den Erkennungsaufwand, z. B. was die Rechenzeit im mobilen Endgerät anbetrifft, zu vereinfachen bzw. zu verkürzen, wird vorgesehen, dass das mobile Endgerät eine alphanumerische Eingabe aufweist. Damit ist es möglich, eine Eingabe einer geläufigen Typenbezeichnung, die jedoch keinesfalls vollständig zu sein braucht, eines realen Hausgerätes vornehmen zu können. Die vollständige Identifizierung des realen Hausgerätes erfolgt somit auf jeden Fall beschleunigt.

Es ist vorgesehen, dass das mobile Endgerät für eine drahtlose Übertragung über ein lokales Netz (LAN), zugehörig zu einem Bereich, in dem sich das reale Hausgerät befindet, vorsehbar ist. Damit ist es möglich, dass ein mobiles Endgerät nicht mit dem kostenpflichtigen Netz eines Mobilfunkunternehmens verbunden werden muss, um mit einem Rechner, der die Datenbank mit den weiteren Daten eines, insbesondere erkannten, Hausgerätes aufweist, eine Verbindung aufbauen zu können.

Dabei ist es möglich, dass ein Rechner mit einer Datenbank mit Daten von Hausgeräten unmittelbar einem Bereich, in dem sich das mindestens eine reale Hausgerät befindet, zuordenbar ist. Es kann jedoch auch vorgesehen sein, dass ein Rechner mit einer Datenbank mit Daten, von realen Hausgeräten entsprechenden Daten, über eine IP- Adresse eines standardisierten Internet Protokolls zu mindestens einem lokalen Netzwerk (LAN) eines Bereiches, in dem sich das mindestens eine reale Hausgerät befindet, zuschaltbar ist.

Es hat sich als günstig erwiesen, wenn der Dekodierschaltkreis des mobilen Endgerätes eine Abfrage der Pixel des analysierbaren Bildes der Kamera so vornimmt, dass eine beschleunigte Erfassung des realen Hausgerätes über Pixel, zugeordnet der Gesamtansicht des realen Hausgerätes, insbesondere unter Berücksichtigung der alphanumerischen Eingabe, erfolgt. Mit dieser Auslegung werden insbesondere die gestaltungstypischen Merkmale, wie Türgriffe in Bezug auf eine Begrenzungskante der Tür zum Öffnen und Schließen eines Hausgerätes, wie eines Kühl-/ Gefrierschrankes oder beispielsweise eines Bullauges einer Frontlader- Waschmaschine in Bezug auf eine in bestimmter Weise gestaltete Bedienblende der Waschmaschine, des realen Hausgerätes zuverlässig erkannt. Mit der nochmals hervorgehobenen alphanumerischen Eingabe kann eine geläufige Typenbezeichnung, auch in unvollständiger Weise, eingegeben werden. Je deutlicher die gestaltungstypischen Merkmale des realen Hausgerätes sind und je genauer die Typenbezeichnung zur Eingabe gelangt, desto schneller kann das reale Hausgerät erkannt werden.

Wenn der Dekodierschaltkreis des mobilen Endgerätes eine Abfrage der Pixel des analysierbaren Bildes der Kamera vornimmt und eine Deckungsgleichheit des Bildes des Hausgerätes, das aus der Datenbank abrufbar ist und dem Bild des realen Hausgerätes vorliegt, ist es auch möglich, die Position des Kunden in Bezug auf ein Hausgerät zu erfassen. Dies gilt insbesondere dann, wenn am mobilen Endgerät bestätigt wurde, dass diese Deckungsgleichheit auch tatsächlich vorliegt.

Das mobile Endgerät kann kundenspezifische bzw. anwendungsspezifisch programmierbare Schaltkreise, insbesondere für den Analysierer/ Dekodierer sowie die Steuerung des Datenverkehrs zu und von dem Rechner aufweisen. Nach der DE 603 17 046 T2 ist eine spezifische Schaltkreisfunktion eines integrierten Schaltkreises erreichbar, ohne dass der Schaltkreis aus dem mobilen Endgerät zu entnehmen ist.

Es ist jedoch auch möglich, dass das mobile Endgerät Speicherplätze für ein ladbares technisches Programm aufweist, so dass unter Einwirkung einer zentralen Steuereinheit eine Gesamtfunktion ausbildbar ist, als ob kundenspezifische Schaltkreise insbesondere für den Analysierer/Dekodierer sowie die Steuerung des Datenverkehrs zu und von dem Rechner, vorliegen würden, die die bestimmungsgemäßen Funktionen ausüben. Dann ist, falls das mobile Endgerät eines Verbrauchers für die Aufnahme, insbesondere der Gesamtansicht des realen Hausgerätes zu verwenden ist, lediglich dafür Sorge zu tragen, dass die erforderliche technische Software bei Zutritt des Verbrauchers zu einem Bereich, innerhalb dessen die realen Hausgeräte sich befinden, in dessen mobiles Endgerät zu laden ist. Es kann sich dabei auch um Software handeln, die nur eine beschränkte Zeit lang nutzbar ist, da eine Organisation, die den Bereich mit den realen Hausgeräten zuständig ist, stets bestrebt sein wird, dass der Verbraucher nur aktuelle technische Software benutzt. Für das Laden der technischen Software kann am Zugang zu dem Bereich innerhalb dessen die realen Hausgeräte sich befinden, eine kontaktbehaftete Schnittstelle oder ein drahtloses, kurzreichweitiges Übertragungsverfahren, wie Bluetooth, zugeordnet dieser Schnittstelle zugrunde gelegt werden. Ein entsprechendes Ladegerät für diese technische Software kann vorgesehen sein.

Zusammenfassend liegt also ein technisches Verfahren zum Betreiben eines Systems vor, wobei mindestens ein betrachtbares, reales Hausgerät, sich in einem örtlich definierbaren Bereich befindet, wobei eine Person, an die sich die Informationsbereitstellung richtet, über ein mobiles Endgerät mit einer Kamera mit Display verfügt und ferner das mobile Endgerät mit einem, insbesondere externen, Rechner mit einer Datenbank mit Daten, über den realen Hausgeräten entsprechenden Hausgeräten, in Verbindung gebracht werden kann, wobei durch die Kamera des mobilen Endgerätes ein Bild des realen Hausgerätes in Gesamtansicht aufgenommen wird, das auch auf dem Display darstellbar ist, sodann erhaltene Pixel des aufgenommenen Bildes analysiert werden, um daraus, insbesondere Musterungs- bezogene Erkennungsdaten des realen Hausgerätes in Gesamtansicht gewinnen zu können, und in Folge davon der Rechner aus dessen Datenbank weitere Daten über das erkannte reale Hausgerät ausliest und an das mobile Endgerät zurücksendet, damit auf dem Display des mobilen Endgerätes eine überlagerte Darstellung der Gesamtansicht des realen Hausgerätes und der Gesamtansicht des aus der Datenbank abgefragten Hausgerätes erfolgen kann, sowie dass eine Koinzidenz des abgefragten Hausgerätes mit dem realen Hausgerät dann vorliegt, wenn auf dem Display eine Deckungsgleichheit der Gesamtansicht des abgefragten Hausgerätes und des realen Hausgerätes vorliegt und bestätigt wird, und sodann erweiterte Daten über das als richtig erkannte reale Hausgerät aus der Datenbank des Rechners ausgelesen werden und auf dem Display des Endgerätes dargestellt werden. Bei der Ausrichtung der Kamera auf das reale Hausgerät wird deren Position verändert sowie deren Brennweite angepasst. Es ist dann auch möglich, Positionsdaten der Person, die das mobile Endgerät bedient, in Bezug auf ein reales Hausgerät an den Rechner zu leiten, was insbesondere dann wichtig ist, wenn ein Bereich mit den realen Hausgeräten, wegen Abschirmungen, für eine GPS-Ortung sich als ungeeignet erweist. Es dürfte vorzusehen sein, dass ausschließlich in dem benannten Rechner, die Auswertung der Positionsdaten der Person vorgenommen werden, an die sich die erweiterten Informationen bei Erkennung des realen Hausgerätes richten.

Es ist auch herauszustellen, das die alphanumerische Eingabe an dem mobilen Endgerät es ermöglicht, eine Eingabe, die eine geläufige - auch unvollständige - Typenbezeichnung des realen Hausgerätes - sein kann, heranzuziehen, um damit den Abfragevorgang bezüglich der Ermittlung der Daten, die dem realen Hausgerät entsprechen, zu beschleunigen. Mit den erweiterten Daten über das als richtig erkannte, reale Hausgerät kann dauerhaft auf dem Display eine kombinierte, alle Informationen betreffende Anzeige erfolgen, bis die Person, die das mobile Endgerät bedient, eine erneute Aufnahme eines anderen Hausgerätes macht.

Unter den Anzeigen, die auf dem Display des mobilen Endgerätes erfolgen können, können sich auch beliebige Darstellungen, wie Schnitt- bzw. Innenansichten, animierte 3-D-Ansichten nachempfindende Ansichten oder Explosionsdarstellungen von zusammenwirkenden Teilen einer Baugruppe, des erkanntes Gerätes befinden, die die Darstellung über die Gesamtansicht des Hausgerätes, die über ursprünglich über die Kamera des mobilen Endgerätes erhalten wurde, ergänzen. Es handelt sich also um die Darstellung einer Erweiterten Realität.

Das technische System und das technische Verfahren ermöglichen es, dass als Verbraucher zu betrachtende Interessenten von Hausgeräten, erweiterte Informationen über die Hausgeräte erhalten. Der Organisator des Bereiches, in dem sich die realen Hausgeräte befinden, kann zu Positionsdaten der Interessenten gelangen, so dass auch ein Bewegungsprofil der Interessenten gewinnbar ist.

Nachfolgend dieser Beschreibung wird die Erfindung noch durch einzeln aufgestellte Ansprüche beansprucht. Soweit dabei durch auf die unabhängigen Ansprüche rückbezogenen, nicht selbständigen Ansprüche eine Weiterbildung der erfindungsgemäßen Lehre erfolgt, so soll es so sein, dass eine zunächst angegebene Kette von Rückbeziehungen nicht einschränkend in Bezug auf die insgesamt mitgeteilte Lehre anzusehen ist, soweit auch andere Kombinationen von Merkmalen von Ansprüchen sich als geeignet und ausführbar aus Sicht des Fachmannes ergeben.

## Patentansprüche

1. System für die erweiterte Informationsbereitstellung, eines betrachtbaren, realen Hausgerätes, wobei eine Person an die sich die Informationsbereitstellung richtet, über ein mobiles Endgerät von mindestens einem zum System gehörenden Endgerät verfügt, das eine Kamera aufweist, wobei die Kamera geeignet ist, ein analysierbares Bild einer Gesamtansicht eines Hausgerätes zu erzeugen, wobei das jeweilig analysierbare Bild auch auf einem Display des mobilen Endgerätes darstellbar ist, sowie dass für erhaltene analysierbare Bilder, ein Analysierer bzw. Dekodierer vorgesehen ist, der analysierte Daten ausgibt, wobei eine drahtlose Übertragung an einen, insbesondere externen, Rechner vorgesehen ist, dessen Datenbank zu den übertragenen Daten weitere aus der Datenbank auslesbare Daten ausgibt, die drahtlos an das mindestens eine mobile Endgerät übertragbar sind, und eine Empfangs- und Verarbeitungseinheit für das mobile Endgerät vorgesehen ist, die eingerichtet ist,
• die ausgelesenen Daten derart aufzubereiten, dass auf dem Display des mobilen Endgerätes eine überlagerte Darstellung der Gesamtansicht des realen Hausgerätes und einer Gesamtansicht eines aus der Datenbank abgefragten Hausgerätes erfolgt,
• eine Koinzidenz des abgefragten Hausgerätes mit dem realen Hausgerät festzustellen, wenn auf dem Display eine Deckungsgleichheit der Gesamtansicht des abgefragten Hausgerätes und des realen Hausgerätes vorliegt und am mobilen Endgerät bestätigt wird, und
• sodann erweiterte Daten über das als richtig erkannte reale Hausgerät aus der Datenbank des Rechners auszulesen und auf dem Display des Endgerätes darzustellen.

2. System nach Anspruch 1, **dadurch gekennzeichnet, dass** das mobile Endgerät eine alphanumerische Eingabe aufweist, insbesondere für die Eingabe einer geläufigen Typenbezeichnung des realen Hausgerätes.

3. System nach Anspruch 1, **dadurch gekennzeichnet, dass** das mobile Endgerät für eine drahtlose Übertragung über ein lokales Netz (LAN), zugehörig zu einem Bereich, in dem sich das reale Hausgerät befindet, vorsehbar ist.

4. System nach einem der Ansprüche 1 bis 3, **dadurch gekennzeichnet, dass** ein Rechner mit einer Datenbank mit Daten von Hausgeräten unmittelbar einem Bereich, in dem sich das mindestens eine reale Hausgerät befindet, zuordenbar ist.

5. System nach einem der Ansprüche 1 bis 3, **dadurch gekennzeichnet, dass** ein Rechner mit einer Datenbank mit Daten, von realen Hausgeräten entsprechenden Daten, über eine IP- Adresse eines standardisierten Internet Protokolls zu mindestens einem lokalen Netzwerk (LAN) eines Bereiches, in dem sich das mindestens eine reale Hausgerät befindet, zuschaltbar ist.

6. System nach einem der vorhergehenden Ansprüche, **dadurch gekennzeichnet, dass** der Dekodierschaltkreis des mobilen Endgerätes eine Abfrage der Pixel des analysierbaren Bildes der Kamera so vornimmt, dass eine beschleunigte Er-fassung des realen Hausgerätes über Pixel, zugeordnet der Gesamtansicht des realen Hausgerätes, insbesondere unter Berücksichtigung der alphanumerischen Eingabe, erfolgt.

7. System nach einem der vorhergehenden Ansprüche 1 bis 4, **dadurch gekennzeichnet, dass** der Dekodierschaltkreis des mobilen Endgerätes eine Abfrage der Pixel des analysierbaren Bildes der Kamera so vornimmt, dass eine beschleunigte Erfassung der Position des Kunden in Bezug auf das Hausgerät über Pixel, zugeordnet den äußeren Konturen des Hausgerätes, erfolgt, insbesondere nach bestätigbarer Deckungsgleichheit gegebenenfalls berechneter Abweichung des Bildes des Hausgerätes, das aus der Datenbank abrufbar ist und dem Bild des realen Hausgerätes.

8. System nach mindestens einem der vorhergehenden Ansprüche, **dadurch gekennzeichnet, dass** das mobile Endgerät, kundenspezifische bzw. anwendungsspezifisch programmierbare Schaltkreise, insbesondere für den Analysierer/ Dekodierer sowie für die Steuerung des Datenverkehrs zu und von dem Rechner aufweist.

9. System nach mindestens einem der vorhergehenden Ansprüche, **dadurch gekennzeichnet, dass** das mobile Endgerät, Speicherplätze für ein ladbares technisches Programm aufweist, so dass unter Einwirkung einer zentralen Steuereinheit eine Gesamtfunktion ausbildbar ist, als ob kundenspezifische Schaltkreise insbesondere für den Analysierer/Dekodierer sowie für die Steuerung des Datenverkehrs zu und von dem Rechner, vorliegen würden, die die bestimmungsgemäßen Funktionen ausüben.

10. Verfahren zum Betreiben eines Systems nach einem der vorhergehenden Ansprüche, wobei mindestens ein betrachtbares, reales Hausgerät, sich in einem örtlich definierbaren Bereich befindet, wobei eine Person, an die sich die Informationsbereitstellung richtet, über ein mobiles Endgerät mit einer Kamera mit Display verfügt und ferner das mobile Endgerät mit einem, insbesondere externen, Rechner mit einer Datenbank mit Daten, über den realen Hausgeräten entsprechenden Hausgeräten, in Verbindung gebracht werden kann, **dadurch gekennzeichnet,**
• **dass** durch die Kamera des mobilen Endgerätes ein Bild des realen Hausgerätes in Gesamtansicht aufgenommen wird, das auch auf dem Display darstellbar ist,
• **dass** erhaltene Pixel des aufgenommenen Bildes analysiert werden, um daraus, insbesondere Musterungs- bezogene Erkennungsdaten des realen Hausgerätes in Gesamtansicht gewinnen zu können,
• **dass** der Rechner aus dessen Datenbank weitere Daten über das erkannte reale Hausgerät ausliest und an das mobile Endgerät zurücksendet,
• **dass** auf dem Display des mobilen Endgerätes eine überlagerte Darstellung der Gesamtansicht des realen Hausgerätes und der Gesamtansicht des aus der Datenbank abgefragten Hausgerätes erfolgt,
• sowie dass eine Koinzidenz des abgefragten Hausgerätes mit dem realen Hausgerät dann vorliegt, wenn auf dem Display eine Deckungsgleichheit der Gesamtansicht des abgefragten Hausgerätes und des realen Hausgerätes vorliegt und am mobilen Endgerät bestätigt wird, und
• **dass** sodann erweiterte Daten über das als richtig erkannte reale Hausgerät aus der Datenbank des Rechners ausgelesen werden und auf dem Display des Endgerätes dargestellt werden.

11. Verfahren nach Anspruch 10, **dadurch gekennzeichnet, dass** in Reaktion auf die Bestätigung der Koinzidenz, Positionsdaten der Person, die das mobile Endgerät bedient, in Bezug auf ein reales Hausgerät an den Rechner geleitet werden.

12. Verfahren nach Anspruch 11, **dadurch gekennzeichnet, dass** Positionsdaten der Person, die das mobile Endgerät bedient, im insbesondere externen, Rechner der Datenbank, die Hausgerätedaten enthält, einer Analyse unterzogen werden, wobei gegebenenfalls auch noch das Ergebnis einer GPS- Erfassung mit herangezogen wird.

13. Verfahren nach einem der Ansprüche 10 bis 12, **dadurch gekennzeichnet, dass** erweiterte Daten über das als richtig erkannte reale Hausgerät dauerhaft auf dem Display zur Anzeige kommen, bis die Person, die das mobile Endgerät bedient, eine erneute Aufnahme eines anderen Hausgerätes macht.

14. Verfahren nach Anspruch 13, **dadurch gekennzeichnet, dass** erweitere Daten über das richtig erkannte reale Hausgerät dazu dienen, beliebige Ansichten, auch Innenansichten, Schnittansichten und dgl. dieses Hausgerätes auf dem Display darstellbar zu machen und somit zu einer die Darstellung des realen Hausgerätes dienenden Ergänzung bzw. der Darstellung einer Erweiterten Realität (Augmented Reality) führen.

15. Computerprogrammprodukt, **dadurch gekennzeichnet, dass** es geeignet ist, ein Verfahren nach mindestens einem der Ansprüche 10 bis 14 unter Berücksichtigung eines mobilen Endgerätes, wie insbesondere in dem Anspruch 9 angegeben, auszuführen, sowie dass das Computerprogrammprodukt in Bezug auf Speicherplätze der Steuerung des mobilen Endgerätes ladbar ist.

## Claims

1. System for the enhanced provision of information on an observable, real household appliance, wherein a person at which the provision of information is aimed possesses a mobile terminal of at least one terminal belonging to the system, which has a camera, wherein the camera is suitable for generating an analysable image of an overall view of a household appliance, wherein the respectively analysable image is also able to be shown on a display of the mobile terminal, and also that an analyser or decoder is provided for obtained analysable images, which outputs analysed data, wherein a wireless transfer to a computer, in particular an external computer, is provided, the database of which outputs to the transferred data further data which is able to be read out from the database, which is able to be transferred wirelessly to the at least one mobile terminal, and there is provision for a receiving and processing unit for the mobile terminal, which is configured
• to edit the read-out data such that an overlaid representation of the overall view of the real household appliance and an overall view of a household appliance retrieved from the database takes place on the display of the mobile terminal,
• to ascertain a coincidence of the retrieved household appliance with the real household appliance, if a congruence of the overall view of the retrieved household appliance and the real household appliance is present on the display and is confirmed at the mobile terminal, and
• then to read out enhanced data regarding the real household appliance recognised as correct from the database of the computer and show it on the display of the terminal.

2. System according to claim 1, **characterised in that** the mobile terminal has an alphanumeric input, in particular for the input of a common type designation of the real household appliance.

3. System according to claim 1, **characterised in that** the mobile terminal is planned for a wireless transfer via a local network (LAN) associated with an area in which the real household appliance is located.

4. System according to one of claims 1 to 3, **characterised in that** a computer with a database with data on household appliances is directly allocatable to an area in which the at least one real household appliance is located.

5. System according to one of claims 1 to 3, **characterised in that** a computer with a database with data, on data corresponding to real household appliances, is able to be connected to at least one local network (LAN) of an area in which the at least one real household appliance is located by way of an IP address of a standardised Internet Protocol.

6. System according to one of the preceding claims, **characterised in that** the decoder circuit of the mobile terminal undertakes a querying of the pixels of the analysable image of the camera such that an accelerated capturing of the real household appliance takes place via pixels, allocated to the overall view of the real household appliance, in particular taking into consideration the alphanumeric input.

7. System according to one of the preceding claims 1 to 4, **characterised in that** the decoder circuit of the mobile terminal undertakes a querying of the pixels of the analysable image of the camera such that an accelerated capturing of the customer in relation to the household appliance takes place via pixels, allocated to the external contours of the household appliance, in particular after confirmable congruence of any possible calculated discrepancy between the image of the household appliance, which can be retrieved from the database, and the image of the real household appliance.

8. System according to at least one of the preceding claims, **characterised in that** the mobile terminal has customer-specific or application-specific programmable circuits, in particular for the analyser/decoder and also for the controller of the data traffic to and from the computer.

9. System according to at least one of the preceding claims, **characterised in that** the mobile terminal has storage space for a loadable technical program, meaning that, under the influence of a central control unit, an overall function is able to be formed as though customer-specific circuits were present in particular for the analyser/decoder and also for the controller of the data traffic to and from the computer, which carry out the intended functions.

10. Method for operating a system according to one of the preceding claims, wherein at least one observable, real household appliance is located in a spatially definable area, wherein a person at which the provision of information is aimed possesses a mobile terminal with a camera with a display, and furthermore the mobile terminal can be linked with a computer, in particular an external computer, with a database with data regarding household appliances corresponding with the real household appliances, **characterised in that**
• an image of the real household appliance is recorded by the camera of the mobile terminal in an overall view, which is also able to be shown on the display,
• obtained pixels of the recorded image are analysed in order to be able to gain recognition data on the real household appliance in an overall view therefrom, in particular relating to model,
• the computer reads out further data from the database thereof relating to the recognised real household appliance and sends it back to the mobile terminal,
• an overlaid representation of the overall view of the real household appliance and the overall view of the household appliance retrieved from the database takes place on the display of the mobile terminal,
• and also that a coincidence of the retrieved household appliance with the real household appliance is then present if a congruence of the overall view of the retrieved household appliance and the real household appliance is present on the display and is confirmed at the mobile terminal, and
• enhanced data regarding the real household appliance recognised as correct is then read out from the database of the computer and shown on the display of the terminal.

11. Method according to claim 10, **characterised in that** as a response to the confirmation of the coincidence, position data on the person operating the mobile terminal is routed to the computer in respect of a real household appliance.

12. Method according to claim 11, **characterised in that** position data on the person operating the mobile terminal is subjected to an analysis in the computer, which is in particular external, of the database containing the household appliance data, wherein the result of a GPS capture may also possibly be used.

13. Method according to one of claims 10 to 12, **characterised in that** enhanced data regarding the real household appliance recognised as correct is permanently shown on the display until the person operating the mobile terminal makes a new recording of another household appliance.

14. Method according to claim 13, **characterised in that** enhanced data regarding the real household appliance recognised as correct is used to make it possible to show any possible views, even interior views, sectional views and the like of said household appliance on the display and therefore leads to a supplementation serving the representation of the real household appliance or the representation of an Augmented Reality.

15. Computer program product, **characterised in that** it is suitable for carrying out a method according to at least one of claims 10 to 14 while taking into consideration a mobile terminal, as specified in claim 9 in particular, and also that the computer program product is able to be loaded in relation to storage space of the controller of the mobile terminal.

## Revendications

1. Système destiné à la mise à disposition de plus amples informations sur un appareil ménager réel pouvant être examiné, dans lequel une personne à laquelle la mise à disposition d'informations s'adresse, dispose d'un terminal mobile d'au moins un terminal appartenant au système, qui présente une caméra, dans lequel la caméra est appropriée pour produire une image analysable d'une vue d'ensemble d'un appareil ménager, dans lequel l'image analysable respective peut être également affichée sur un écran du terminal mobile, ainsi que, pour des images analysables obtenues, un analyseur, respectivement un décodeur, est prévu, qui fournit des données analysées, dans lequel une transmission sans fil à un ordinateur, en particulier externe, est prévue, dont la base de données fournit aux données transmises des données supplémentaires pouvant être lues à partir de la base de données, qui peuvent être transmises sans fil à l'au moins un terminal, et une unité de réception et de traitement pour le terminal mobile est prévue qui est conçue pour :
- traiter les données lues de façon à ce que sur l'écran du terminal mobile, il y ait un affichage superposé de la vue d'ensemble de l'appareil ménager réel et d'une vue d'ensemble d'un appareil interrogé à partir de la base de données,
- déceler une coïncidence de l'appareil ménager interrogé avec l'appareil ménager réel si sur l'écran, une égalité de couverture de la vue d'ensemble de l'appareil ménager interrogé et de l'appareil ménager réel est présente et est validée sur le terminal mobile, et
- ensuite lire et afficher sur l'écran du terminal mobile de plus amples données sur l'appareil ménager réel reconnu comme correct à partir de la base de données de l'ordinateur.

2. Système selon la revendication 1, **caractérisé en ce que** le terminal mobile présente une saisie alphanumérique, en particulier pour la saisie d'une désignation de type courante de l'appareil ménager réel.

3. Système selon la revendication 1, **caractérisé en ce que** le terminal mobile peut être prévu pour une transmission sans fil par un réseau local (LAN) faisant partie d'une zone dans laquelle l'appareil ménager réel se trouve.

4. Système selon l'une des revendications 1 à 3, **caractérisé en ce qu'**un ordinateur avec une base de données avec des données d'appareils ménagers peut être affecté directement à une zone dans laquelle l'au moins un appareil ménager réel se trouve.

5. Système selon l'une des revendications 1 à 3, **caractérisé en ce qu'**un ordinateur avec une base de données avec des données, des données correspondant à des appareils ménagers réels, peut être connecté à au moins un réseau local (LAN) d'une zone dans laquelle l'au moins un appareil ménager réel se trouve, par une adresse IP d'un protocole Internet standardisé.

6. Système selon l'une des revendications précédentes, **caractérisé en ce que** le circuit de décodeur du terminal mobile, effectue une interrogation des pixels de l'image analysable de la caméra de façon à ce qu'une détection accélérée de l'appareil ménager réel soit effectuée par des pixels, affectés à la vue d'ensemble de l'appareil ménager réel, en particulier en tenant compte de la saisie alphanumérique.

7. Système selon l'une des revendications 1 à 4, **caractérisé en ce que** le circuit de décodeur du terminal mobile effectue une interrogation des pixels de l'image analysable de la caméra de façon à ce qu'une détection accélérée de la position du client par rapport au terminal mobile soit effectuée par des pixels, affectés aux contours extérieurs de l'appareil ménager, en particulier selon l'égalité de couverture pouvant être validée, le cas échéant l'écart calculé de l'image de l'appareil ménager qui peut être interrogé à partir de la base de données et l'image de l'appareil ménager réel.

8. Système selon l'une des revendications précédentes, **caractérisé en ce que** le terminal mobile présente des circuits programmables spécifiques au client, respectivement spécifiques à l'application, en particulier pour l'analyseur/le décodeur ainsi que pour piloter le trafic de données vers et depuis l'ordinateur.

9. Système selon l'une des revendications précédentes, **caractérisé en ce que** le terminal mobile présente des emplacements de mémoire pour un logiciel technique pouvant être chargé, de façon à ce que sous l'action d'une unité de commande centrale, une fonction d'ensemble puisse être formée, comme si des circuits spécifiques au client, en particulier pour l'analyseur/le décodeur ainsi que pour le pilotage du trafic de données vers et depuis l'ordinateur étaient présents, qui exercent les fonctions normales.

10. Procédé d'exploitation d'un système selon l'une des revendications précédentes, dans lequel au moins un appareil ménager réel pouvant être examiné se trouve dans une zone définie localement, dans lequel une personne à laquelle la mise à disposition d'informations s'adresse, dispose d'un terminal mobile avec une caméra avec écran, et en outre, le terminal mobile peut être mis en liaison avec un ordinateur en particulier externe, avec une base de données avec des données, des données correspondant aux appareils ménagers réels, **caractérisé en ce**
- **qu'**une image de l'appareil ménager réel est prise en vue d'ensemble par la caméra du terminal mobile, laquelle peut être également affichée sur l'écran,
- **que** des pixels obtenus de l'image prise sont analysés pour en extraire des données d'identification, en particulier liées à l'examen, de l'appareil ménager réel en vue d'ensemble,
- **que** l'ordinateur lit et envoie au terminal mobile des données supplémentaires à partir de sa base de données sur l'appareil ménager réel détecté,
- **que** sur l'écran du terminal mobile, il s'effectue un affichage superposé de la vue d'ensemble de l'appareil ménager réel et de la vue d'ensemble de l'appareil ménager interrogé à partir de la base de données,
- et **qu'**une coïncidence de l'appareil ménager interrogé avec l'appareil ménager réel existe si sur l'écran, une égalité de couverture de la vue d'ensemble de l'appareil ménager interrogé et de l'appareil ménager réel est présente et est validée sur le terminal mobile, et
- **qu'**ensuite sont lues et affichées sur l'écran du terminal mobile de plus amples données sur l'appareil ménager réel reconnu comme correct à partir de la base de données de l'ordinateur.

11. Procédé selon la revendication 10, **caractérisé en ce qu'**en réaction à la validation de la coïncidence, des données de position de la personne qui utilise le terminal mobile sont transmises à l'ordinateur en rapport avec un appareil ménager réel.

12. Procédé selon la revendication 11, **caractérisé en ce que** des données de position de la personne qui utilise le terminal mobile dans l'ordinateur, en particulier externe, de la base de données qui contient les données d'appareil ménager, sont soumises à une analyse, dans lequel dans le cas échéant, le résultat est également rapproché d'une saisie GPS.

13. Procédé selon l'une des revendications 10 à 12, **caractérisé en ce que** de plus amples données sur l'appareil ménager réel reconnu comme correct sont affichées de manière durable sur l'écran jusqu'à ce que la personne qui utilise le terminal mobile effectue une nouvelle photo d'un autre appareil ménager.

14. Procédé selon la revendication 13, **caractérisé en ce que** de plus amples données sur l'appareil ménager réel reconnu comme correct servent à pouvoir afficher sur l'écran des vues au choix, également des vues intérieures, des vues en coupe et similaires de cet appareil ménager, et conduisent ainsi à un complément servant à afficher l'appareil ménager réel, respectivement, à l'affichage d'une réalité augmentée (augmented reality).

15. Produit logiciel informatique, **caractérisé en ce qu'**il est approprié pour exécuter un procédé selon au moins l'une des revendications 10 à 14 en tenant compte d'un terminal mobile, comme indiqué en particulier à la revendication 9, et que le produit logiciel informatique peut être chargé par rapport à des emplacements de mémoire de la commande du terminal mobile.
